# EUROPEAN PATENT SPECIFICATION

(11) **EP 1 316 503 B1**
(45) Date of publication and mention of the grant of the patent: **13.12.2006**
(21) Application number: 02079223.0
(22) Date of filing: 10.10.2002
(51) Int. Cl.: B64C 27/35, F16F 1/393, F16D 3/76, F16C 11/04

(54) **Elastomeric bearing assembly with preloaded opposing conical bearing elements and method of forming the same**
Elastomerlager mit vorgespannten entgegengesetzten konischen Lagerelementen und ein Verfahren zur dessen Herstellung
Ensemble palier elastomère avec des éléments paliers préchargés coniques opposés et son procédé de fabrication

(30) Priority: 10.10.2001 US 974991; 10.10.2001 US 975138
(43) Date of publication of application: 04.06.2003
(60) Divisional application: 06076474.3
(73) Proprietor: The Boeing Company, Chicago, IL 60606-1596 (US)
(72) Inventor: Loftus, Robert T., Jr., Gilbert, AZ 85296-1700 (US); Muylaert, Neal W., Apache Junction, AZ 85219-9398 (US)
(74) Representative: Land, Addick Adrianus Gosling

(56) References cited:
- US-A- 2 414 743
- US-A- 2 937 040
- US-A- 4 522 563
- US-A- 4 543 040
- US-A- 4 772 151
- US-A- 4 859 148
- US-B1- 6 413 048

## Description

### Field of the Invention

This invention relates generally to elastomeric bearings and specifically to opposed internally pre-loaded conical elastomeric bearings.

### BACKGROUND OF THE INVENTION

A key component of a helicopter is the main rotor hub. It provides attachment of the main rotor blades during operation. Rotational power is delivered to the main rotor hub to provide rotational velocity to the blades in order to create aerodynamic lift. The main rotor hub must allow for rotational motion of the blades in the vertical (flap), horizontal (lead-lag), and axial (pitch) directions near the blade root attachment with the hub to accommodate flight control authority and dynamic stability. Main rotor hub systems that accommodate these motions with discrete hinge mechanisms are referred to as fully articulated hubs. Through out the history of the helicopter, engineers have struggled to provide these rotational freedoms with bearing systems that can accommodate high frequency and high amplitude oscillatory motion under high thrust loading created by the centrifugal force of the rotating blades. Elastomeric bearings have become an industry standard for accommodating flap-wise motion in articulated hub systems. These bearings are composed of elastomeric material that allows for shear compliance within the elastomer, and for rotational freedom while reacting radial centrifugal force in compression.

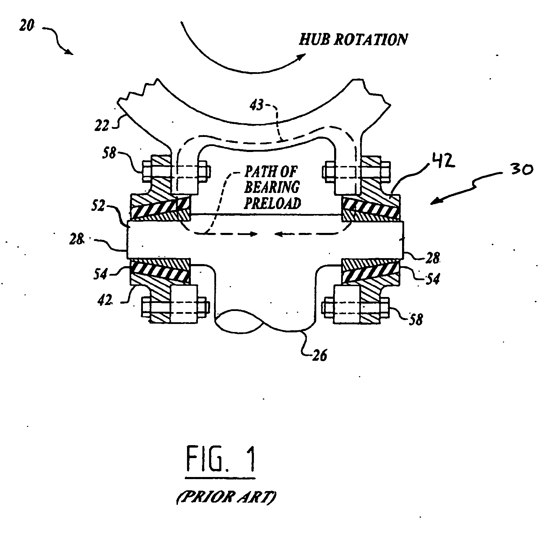

Elastomeric conical bearings are commonly used in bearing assemblies for helicopter rotor systems to accommodate rotor motion. The bearing assemblies are axially preloaded to prevent the conical bearing elements from experiencing a resultant tensional load. Currently, mono-directional bearing elements are employed at each attachment site of the main rotor hub. FIGURE 1 depicts a view of a prior art articulated hub assembly 20. The hub assembly 20 includes a tie bar 26 connected to a hub center body 22. The tie bar 26 is connected to the center body 22 in a similar manner as disclosed in FIG.1, however, the bearing assembly 30 is substantially different. The bearing assembly 30 includes a pair of conical bearing elements 52 contacting the journal 28 on the bearing's inner surface and the outer bearing surface is contained within an outer housing 42. Each bearing element is a mono-directional single conical taper bearing having an elastomeric element 54 contained within. The conical bearing elements 52 are arranged such that the apex of the conical bearing elements 52 extends radially outward from one another. The bearing arrangement yields a force couple that extends from one bearing to the other. The force couple yields a bearing pre-load path 43 extending through the hub center body 22.

The prior art design creates an extended force couple resulting in a bearing pre-load path extending through the main rotor hub center body. The hub center body must be designed to carry the extra loading. The extra design requirements add weight to the overall rotor hub reducing the aircraft's load capacity and fuel efficiency.

US-A-4,859,148 discloses a tail rotor flapping hinge elastomeric bearing in which the inner and outer races are split and the races have ramped surfaces with the higher slope of the inner races being toward the outer edge of the bearing.

### Summary of the Invention

The invention provides a weight-reducing bearing assembly for rotary aircraft according to claim 1.

The proposed invention provides a unique flap bearing arrangement by localizing the pre-load within each flap bearing assembly and, thus, eliminates the necessity for the transfer of the pre-load through the hub structure. The elimination of bearing pre-load through the hub structure can significantly reduce weight of the rotor hub assembly. Many components, including the bearing attachment flanges on the hub center body as well as the bearing housings can be configured to accommodate only the design flight and static loads without having to carry the off axis bearing pre-loads. The unique design of the instant invention yields an approximate 6% - 10% weight reduction in the main rotor hub assembly, a mounting to 27 to 45 kg (60 to 100 pounds).

The invention also provides a method of efficiently forming a flap bearing assembly for rotary aircraft according to claim 12.

### Brief Description of the Drawing

The preferred and alternative embodiments of the present invention are described in detail below with reference to the following drawings.
FIGURE 1 is a partially sectional isolated plan view of a prior art bearing assembly;
FIGURE 2 is an isometric view of an articulated hub assembly;
FIGURE 3 is a partially sectional isolated plan view of a bearing assembly of the instant invention;
FIGURE 4 is an exploded cross sectional view of the bearing assembly;
FIGURE 5 is a cross sectional view of the bearing assembly;
FIGURE 6 is an alternative isometric view of the bearing assembly;
FIGURE 7 is a partial sectional view of the bearing assembly; and
FIGURE 8 is a partial sectional view of the bearing assembly.

### DETAILED DESCRIPTION OF THE INVENTION

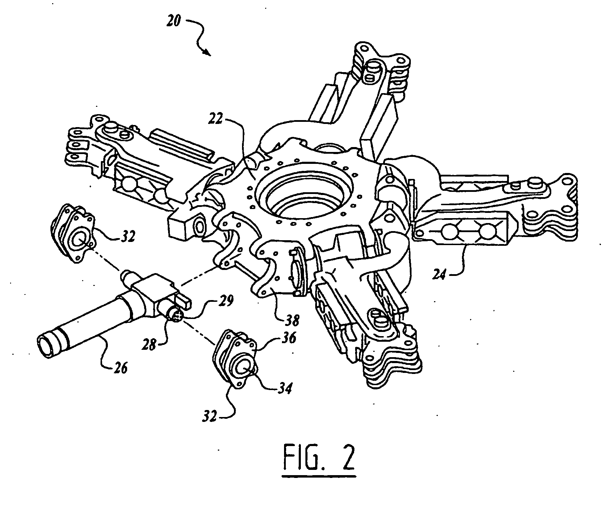

FIGURE 2 depicts a fully articulated hub assembly 20 that includes a pre-loaded, opposed flap bearing assembly 30 that maintains a force couple bearing pre-load path entirely within the flap bearing assembly 30. The hub assembly 20 includes a plurality of rotor assemblies 24 radially attached to a hub center body 22. The articulated hub assembly 20 is designed to allow and to control the flap, pitch and lead-lag motion of an aircraft rotor.

In a presently preferred embodiment, the rotor assembly 24 includes a tie bar 26. However, any other rotor attachment structure or assembly is considered within the scope of the invention. The tie bar 26 is a substantially cylindrical shaped element having a pair of radially opposed journals 28 at an end. Each journal 28 is designed to receive the flap bearing assembly 30. The bearing assembly 30 extends over the journal 28 attaching itself to the journal 28 via a plurality of alignment dowels and a tie ban attachment lug (not shown). The tie bar 26 and bearing assembly 30 combination attach the rotor assembly 24 to the hub center body 22 and control flap motion of the rotor assembly 24.

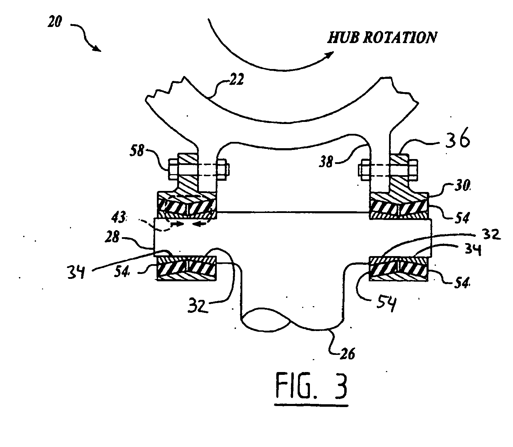

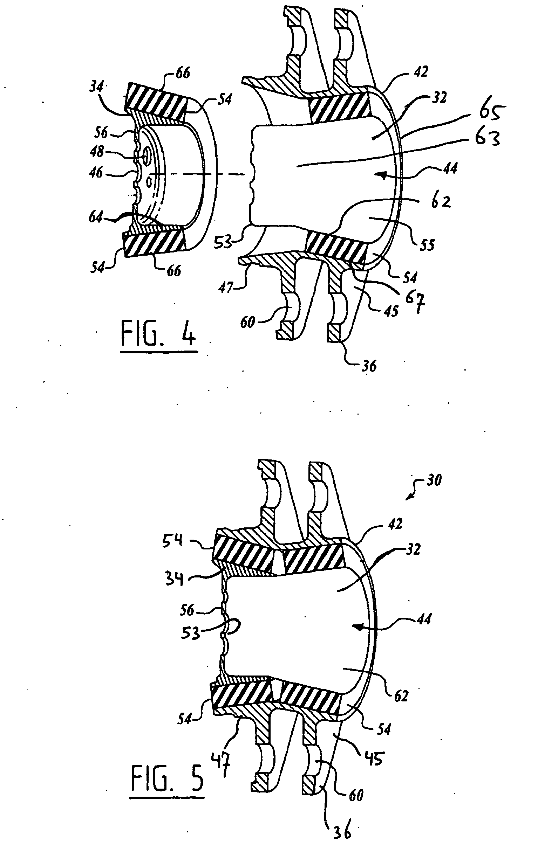

The bearing assembly 30, as shown in figure 3, includes an inboard bearing element 32 and an outboard bearing element 34 contained within an outer housing 42 (figure 4) to form the bearing assembly 30. The outer surface of the outer housing 42 is configured to attach the bearing assembly to another structure, for example, the main rotor hub 22. In a presently preferred embodiment, the outer housing 42 includes two pair of radially extending bearing flanges 36 configured to mate with a hub yolk 38 of the hub center body 22. However, any other structure or arrangement for attaching the bearing assembly 30 to the rotor hub 22 located on the outer housing 42 is considered within the scope of this invention, for example, a single pair of projections or molding the outer housing to the hub. A plurality of flange bores 60 align with yolk bores 40 allowing fasteners (not shown) to rigidly attach the structures.

FIGURE 3 depicts a partial sectional isolated plan view of the hub assembly 20 of the instant invention. The tie bar 26 is attached to the hub assembly 20 via a pair of bearing assemblies 30 attached to the hub yolk 22 by attachment lug 58. The bearing assemblies 30 extend over and contact each respective journal 28. Each bearing assembly 30 includes a mated set of opposed, taper conical elastomeric bearing elements, 32 and 34, enclosed within an outer housing 42b. When preloaded in the axial direction, the opposed bearing assembly 30b limits the force couple to each individual bearing assembly 30. According to the invention, the force couple is not passed through the hub center body. The force couple yields a bearing pre-load path 43 that remains entirely within each respective bearing assembly 30.

FIGURE 4 depicts an exploded cross sectional view of the flap bearing assembly 30. The bearing assembly 30 includes an outboard bearing element 34 and an inboard bearing element 32 disposed within an outer housing 42. The outer housing 42 includes a first section 45 and a second section 47.

The first section 45 includes a pair of radially extending flange sections 36. The flange sections 36 are configured to align with the hub yolk 38 (FIG. 1, 2 and 3). An inner surface of the first section 45 is shaped to receive the inboard bearing element 32. More specifically, an outer surface of the inboard bearing element 32 is bonded to the inner surface of the outer housing 42 in the first section 45. The bonding method is suitably any commonly known bonding method used in the art.

Disposed inside and adjacent the outer surface of the inboard bearing element 32 is an elastomeric element 54. The composition of the elastomeric element 54 can be any of the commonly employed elastomeric compositions, and is variable based upon the loading requirements of the employment environment. For example, an elastomeric element with a plurality of metal laminates is considered within the scope of this invention.

Positioned on an inner surface of the elastomeric element 54 is an inner race 62 of the inboard bearing element 32. The inner race 62 includes a distal section 63 and a proximal section 65. The outer surface of the inner race 62 is tapered in the direction of the outboard bearing element 34. The inner surface of the inner race 62 forms an axial bore 44 therethrough. The bore 44 is sized to receive the journal 28 through an open end 55 and extends into the distal section 63. The axial bore 44 terminates at an inner race closed end plate 53. An outer surface of the distal section 63 is substantially cylindrically shaped and configured to receive an inner race 64 of the outboard bearing element 34.

The outboard bearing element 34 has a taper wherein the taper is in an opposing direction to the inboard bearing element 32. The outer surface 66 is configured to bond with the inner surface of the second section 47 of the outer housing 42. The inner race 64 has an open end to receive the distal section 63 of the inboard bearing inner race 62. At another end of the inner race 64 of the outboard bearing 34 is an outer plate 56. Sandwiched between the outer race 66 and inner race 64 is another elastomeric element 54.

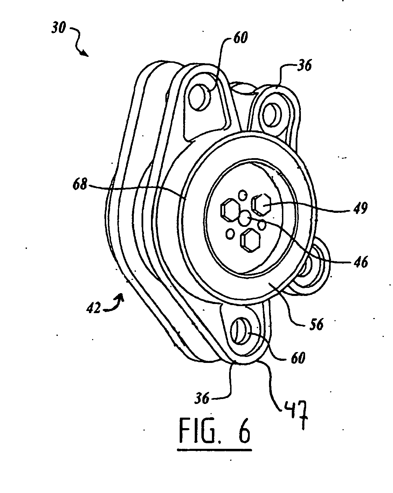

The outer plate 56 and the inner race closed end plate 53 have a plurality of aligned bores extending therethrough. A tie bar attachment bore 46 is centrally disposed through each to receive a tie bar attachment lug (not shown). The tie bar attachment lug maintains the bearing assemblies 30 connection with the tie bar 26. Further, a plurality of coupler bores 48 are disposed through the respective surfaces. Each coupler bore receives a coupler lug 49 (FIG. 6) to maintain the spatial integrity between the inboard 32 and outboard 34 bearing elements. Further, a plurality of dowel bores extend through the respective plates, each bore receiving alignment dowels (not shown) extending from the journal end 28 (FIG. 2).

FIGURE 5 depicts a cross sectional view of the flap bearing assembly 30. The inboard bearing element 32 and the outboard bearing element 34 are coupled via a friction fit between the respective elements and the bearing coupler lugs 49. Shown in figure 6. More specifically, the inner race of the outboard bearing 64 and the inner race of the inboard bearing 62 are frictionally mated upon insertion of the outboard bearing element 34. Additionally, the outer race 66 of the outboard bearing element 34 is bonded to the inner surface of the outer housing 42. Consequently, the outer housing 42 encompasses both the inboard bearing element 32 and the outboard bearing element 34 in a single unitary assembly.

FIGURE 6 depicts the assembled flap bearing assembly 30. The bearing assembly includes an outer housing 42 surrounding the inner and outer bearing elements 32 and 34. The outboard bearing assembly 34 is pressure fit into the inboard bearing element 32, as shown in figure 5, and then bonded between the outer race 66 of the outboard bearing 34 and an inner surface 62 of the inboard bearing 32.

As discussed above, bearing coupler lugs 49 are disposed through the bearing coupler bores 48, figure 4, connecting the outboard bearing element 34 to the inboard bearing element 32. Additionally, a tie bar attachment bore 46 is axially located through the respective bearing elements 32,34 and is in alignment with a respective bore in the journal end 28 (see FIGURE 2). An attachment lug (not shown) is disposed through the tie bar attachment bore 46 and mechanically fastened to the journal end 28. Consequently, a bearing integrity redundancy is created by the two separate coupling structures.

The bearing assembly 30 is axially pre-loaded. In the preferred embodiment, a bearing assembly 30 axial pre-load of 3855-6804 kg (8500-15,000 1b.) range is desired. The pre-load helps to prevent the elastomeric elements of the bearing assembly 30 from tensional loading during operating conditions. However, any other pre-load is considered within the scope of this invention. The axial pre-load can be applied through the coupler lugs 49, the tie bar attachment lug (not shown) or combinations thereof.

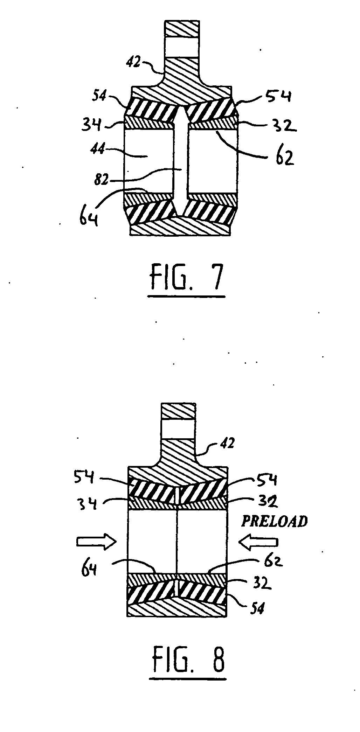

FIGURES 7 and 8 depict a partial sectional view of the opposed conical elastomeric bearings with and without pre-loading, FIG. 7, and with pre-loading, FIG. 8. A bearing gap 82 is located between the respective inboard and outboard bearing elements, 32 and 34 respectfully, prior to any axial pre-loading. As the axial pre-load is applied the bearing elements, 32 and 34, are brought together. The inner races, 62 and 64, frictionally engage one another and any space, or bearing gap 82, between the bearing elements, 32 and 34 is removed. The bearing elements, 32 and 34, combine within the bearing assembly 30 to carry the flap-wise motion of the rotor assembly 24.

The manufacture of the bearing assembly is a several step process. Initially, as shown in figs. 4 and 5, a primary bond is created within each bearing element. More specifically, the inner and outer race of each bearing element, 62 and 67 respectively for the inboard bearing element 32, 64 and 66 for the outboard bearing element 34, is bonded to an elastomeric element 54 disposed between the inner and outer race of each bearing element. The primary bond adheres the race elements directly to the elastomeric element 54. In a presently preferred embodiment, the primary bond is created by injecting the elastomeric element 54 into a mold created by the placement of the respective race elements. Upon solidification of the injected elastomeric material the primary bond is formed. However, other primary bond methods are considered within the scope of this invention. Once the primary bond is created between the inner race 62 and 64 and the outer race 62 and 66 of inboard bearing element 32 and the outboard bearing element 34 the respective bearing elements are ready for the next process.

The inboard bearing element 32 is inserted into a first section 45 of the outer housing 42. The inboard bearing element 32 is inserted with the conical taper directed toward a second section 47 of the outer housing. Upon inserting of the inboard bearing element 32, the inner race 63 of the inboard bearing element 32 extends a distance into an area of the second section 47.

Upon insertion or slightly thereafter, a secondary bond is created between the outer race 67 of the inboard bearing element 32 and an inner surface of the outer housing 42. In the preferred embodiment, the secondary bond is an adhesion. However, any other bond commonly known in the art is considered within the scope of this invention.

The outboard bearing element 34 is inserted into the second section 47 of the outer housing 42, see figure 5. The outboard bearing element 34 is inserted with the conical taper directed toward the inboard bearing element 32, thus creating an opposed bearing couple.

The insertion of the outboard bearing 34 into the outer housing 42 yields several occurrences. First, the inner race 64 of the outboard bearing element 34 is pressure fit into the inner race 62 of the inboard bearing element 32. Simultaneously, another secondary bond, similar to the other secondary bond, is created between the outer race 66 of the outboard bearing element 34 and an inner surface of the outer housing 42. Also, simultaneously, the bearing pre-load is applied to the bearing assembly. The bearing pre-load is preferably about 3855kg to about 6804 kg (about 8,500 to about 15,000 pounds). However, any pre-load range is considered within the scope of this invention. At this point, the bearing assembly is nearly complete.

A plurality of bearing coupler lugs 49 are employed to help maintain the bearing assembly 30 integrity, as shown in figure 6. In the preferred embodiment, three coupler lugs 49 are employed with the bearing assembly. However, any number of coupler lugs may be employable with this invention.

The coupler lugs 49 serve two primary purposes. First, the lugs 49 serve as a redundant secondary bond 68. More specifically, the lugs 49 assist the secondary bond 68 in carrying the axial pre-load. Secondly, the lugs 49 prevent any rotational displacement of the respective bearing elements.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. Rotary aircraft flap bearing assembly (30), comprising:
- an outer housing (42) defining a first (45) and a second section (47), the outer housing (42) having an outer surface configured to attach to a hub centre body (22) and an inner surface configured to receive a mated set of opposed, taper conical elastomeric bearing elements (32, 34);
- a tapered conical axially inboard elastomeric bearing element (32) having an outer race (67) and an inner race (62), the outer race (67) being bonded to the inner surface of the outer housing (42) and the inner race (62) having an extended portion defining a closed end plate (53), wherein the conical inward taper of the inboard bearing element (32) is directed axially inward with respect to the outer housing (42), the closed end plate (53) defining a plurality of bores (44) therethrough;
- a tapered conical axially outboard elastomeric bearing element (34) having an outer race (66) and an inner race (64), the outer race (66) being bonded to the inner surface of the outer housing (42) and the inner race (64) being frictionally engaged with the extended portion of the inner race (62) of the inboard bearing element (32), wherein the conical taper of the outboard bearing element is axially inwardly directed in a direction that is directly opposed to the inboard bearing taper, the inner race (64) of the outboard bearing element (34) forming an outer plate (56) defining a plurality of bores (46, 48) therethrough, wherein an axial pre-load is applied to the inboard bearing element (32) and the outboard bearing element (34); and
- at least one bearing coupler lug (49) connecting the bearing elements (32, 34).

2. Bearing assembly according to claim 1, wherein the pre-load is in a range from about 3855 kilograms (8,500 pounds) to about 6804 kilograms (15,000 pounds).

3. Bearing assembly according to claim 1 or 2, wherein the plurality of bores defined through the respective inner races (62, 64) includes at least one of an axial bore (44), a bearing coupler bore (48) and a dowel bore.

4. Bearing assembly according to claim 1, 2 or 3, further comprising an elastomeric element (54) within the inboard bearing element (32).

5. Bearing assembly according to any of the foregoing claims, further comprising an elastomeric element (54) within the outboard bearing element (34).

6. Bearing assembly according to any of the foregoing claims, further comprising a plurality of flange sections (36) extending from the outer housing (42).

7. Bearing assembly according to any of the foregoing claims, wherein the inner race (62) of the inboard bearing (32) and the inner race (64) of the outboard bearing (34) are configured to receive a journal (28).

8. Rotary aircraft fully articulated hub assembly (20), comprising:
- a hub center body (22) including a plurality of attachment sections, configured to receive a plurality of bearing assemblies (30), positioned about a periphery of the hub center body (22);
- a plurality of rotor assemblies (24) configured to receive a pair of bearing assemblies (30); and
- a plurality of bearing assemblies (30) according to any of claims 1-7.

9. Hub assembly according to claim 8, further comprising closed end plates formed by the respective inner races (62, 64) of the inboard bearing element (32) and the outboard bearing element (34).

10. Hub assembly according to claim 8 or 9, further comprising a plurality of bearing coupler lugs (49) connecting the inboard bearing element (32) and the outboard bearing element (34) within the outer housing (42).

11. Hub assembly according to claim 8, 9 or 10, further comprising a tie bar attachment lug centrally disposed through the closed end plates connecting the bearing assembly (30) to the rotor assembly (24).

12. Method for forming a flap bearing assembly (30) for rotary aircraft, comprising:
- forming an axially inboard bearing element (32), the inboard bearing element (32) including an inner race (62) primarily bonded to an elastomeric element (54) and an outer race (67) primarily bonded to the elastomeric element (54);
- forming an axially outboard bearing element (34), the outboard bearing element (34) including an inner race (64) primarily bonded to an elastomeric element (54) and an outer race (66) primarily bonded to the elastomeric element (54);
- forming an outer housing (42), the outer housing (42) having an outer surface and an inner surface, the outer surface having a plurality of flange sections (36) extending radially from the outer surface, the inner surface configured to receive inboard (32) and the outboard bearing elements (34);
- inserting the inboard bearing element (32) into the outer housing (42);
- bonding the outer race (67) of the inboard bearing element (32) to the inner surface of the outer housing (42) to form a first secondary bond;
- inserting the outboard bearing element (34) into the outer housing (42) such that a frictional connection is achieved between the inner race (62) of the inboard bearing element (32) and the inner race of the outboard element (34);
- bonding the outer race (66) of the outboard bearing element (34) to the inner surface of the outer housing (42) to form a second secondary bond;
- pressing the inboard bearing element (32) and the outboard bearing element (34) together to create an axial pre-load; and
- attaching a plurality of bearing coupler lugs (49) axially through the inboard bearing element (32) and the outboard bearing element (34).

13. Method according to claim 12, wherein the first and second, secondary bonds are adhesion bonds.

14. Method according to claim 13, wherein pressing the outboard bearing element (34) further comprises:
joining the inner race (62) of the inboard bearing element (32) with the inner race (64) of the outboard bearing element (34) by a friction fit.

15. Method according to claim 13 or 14, wherein the bearing assembly (30) is a rotary aircraft flap bearing assembly.

16. Method according to claim 13, 14 or 15, comprising:
- forming an outer housing (42) having a first section (45) and a second section (47), the outer housing (42) including an outer surface having a plurality of flange portions (36) radially extending therefrom, the outer housing (42) including an inner surface configured to receive a bearing element (32) in the first section (45) and a bearing element (34) in the second section (47);
- forming a tapered conical bearing element (30) including an outer race primarily bonded to an elastomeric element (54) and an inner race primarily bonded to the elastomeric element (54), the inner race including an extended portion extending beyond the elastomeric element and having a closed end;
- inserting the inboard bearing element (32) into the first section (45) of the outer housing (42), the conical taper bearing element (32) being inwardly directed;
- bonding the outer race (67) of the inboard bearing element (32) to the inner surface of the outer housing (42) in the first section (45) to form a first secondary bond;
- forming a tapered conical outboard bearing element (34), the bearing element (34) including an outer race (66) primarily bonded to an elastomeric element (54) and an inner race (64) primarily bonded to the elastomeric element (54), the inner race (64) including a receiving portion mated to receive the extended portion of the inner race (62) of the inboard bearing (32), the inner race (62) forming an outer plate;
- inserting the outboard bearing element (34) into the second section (47) of the outer housing (42), the conical taper bearing element (34) being inwardly directed, taper directions of the inserted bearing elements (32, 34) opposing one another and respective inner races (62, 64) frictionally engaging one another, an axial pre-load being applied to the bearing elements (32, 34);
- bonding the outer race (66) of the outboard bearing element (34) to the inner surface of the outer housing (42) in the first section (45) to form a second secondary bond; and
- connecting the respective bearing element with a plurality of bearing coupler lugs (49).

17. Method of forming a fully articulated rotary hub assembly for rotary aircraft, comprising:
- forming a hub center body (22) including a plurality of attachment sections positioned about a periphery of the hub center body (22), the attachments sections being configured to receive a plurality of bearing assemblies (30), creating a plurality of rotor assemblies (24) including a tie bar (26) having a pair of tie bar journal sections (28) configured to be inserted into the bearing assemblies (30);
- forming a internally preloaded bearing assembly (30) according to any of claims 12-16.

18. Method according to claim 17, further comprising axially pre-loading the bearing elements (32, 34) within the bearing assembly (30).

19. Method according to any of claims 12-18, wherein the axial pre-load is in a range from about 3855 kilograms (8,500 pounds) to about 6804 kilograms (15,000 pounds).

20. Method according to any of claims 12-19, further comprising fastening the bearing assembly (30) to the tie bar journal (28) by a fastener extending axially through the bearing assembly (30) and into an end of the tie bar journal (28).

21. Method according to claim 20, wherein the fastener is a bolt.

22. Method according to any of claims 12-21, wherein the bearing assembly (30) allows for flap motion of the rotor assembly (24) relative to the hub center body (22).

## Patentansprüche

1. Drehflügelflugzeugklapplageranordnung (30), welche umfasst:
- ein äußeres Gehäuse (42), welches einen ersten (45) und einen zweiten Abschnitt (47) definiert, wobei das äußere Gehäuse (42) eine äußere Oberfläche, die ausgestaltet ist, um an einen Nabenmittelkörper (22) angebracht zu werden, und eine innere Oberfläche aufweist, die ausgestaltet ist, um eine zusammenpassende Gruppe von entgegengesetzten konisch schrägen Elastomerlagerelementen (32, 34) aufzunehmen;
- ein axial abgeschrägtes konisches inneres Elastomerlagerelement (32) mit einem äußeren Laufring (67) und einem inneren Laufring (62), wobei der äußere Laufring (67) mit der inneren Oberfläche des äußeren Gehäuses (42) verbunden ist und wobei der innere Laufring (62) einen erweiterten Abschnitt aufweist, welcher eine geschlossene Endplatte (53) definiert, wobei die konische innere Abschrägung des inneren Lagerelements (32) bezogen auf das äußere Gehäuse (42) axial nach innen gerichtet ist, wobei die geschlossene Endplatte (53) mehrere Bohrungen (44) **dadurch** definiert;
- ein axial konisch abgeschrägtes äußeres Elastomerlagerelement (34), welches einen äußeren Laufring (66) und einen inneren Laufring (64) aufweist, wobei der äußere Laufring (66) mit der inneren Oberfläche des äußeren Gehäuses (42) verbunden ist, und wobei der innere Laufring (64) mit dem erweiterten Abschnitt des inneren Laufrings (62) des inneren Lagerelements (32) reibungsgekoppelt ist, wobei die konische Abschrägung des äußeren Lagerelements in einer Richtung axial nach innen gerichtet ist, welche direkt entgegengesetzt zu der inneren Lagerabschrägung ist, wobei der innere Laufring (64) des äußere Lagerelements (34) eine äußere Platte (56) ausbildet, welche mehrere Bohrungen (46, 48) **dadurch** definiert, wobei eine axiale Vorspannkraft auf das innere Lagerelement (32) und das äußeren Lagerelement (34) angewendet wird; und
- mindestens einen Lagerkoppelansatz (49), welcher die Lagerelemente (32, 34) verbindet.

2. Lageranordnung gemäß Anspruch 1, wobei die Vorspannkraft in einem Bereich von näherungsweise 3855 kg (8500 Pfund) bis näherungsweise 6804 kg (15 000 Pfund) ist.

3. Lageranordnung gemäß Anspruch 1 oder 2, wobei die mehreren Bohrungen, welche durch die entsprechenden inneren Laufringe (62, 64) definiert sind, mindestens eine axiale Bohrung (44), eine Lagerkoppelbohrung (48) und eine Stiftbohrung aufweisen.

4. Lageranordnung gemäß Anspruch 1, 2 oder 3, welche ferner ein Elastomerelement (54) innerhalb des inneren Lagerelements (32) umfasst.

5. Lageranordnung gemäß einem der vorhergehenden Ansprüche, welche ferner ein Elastomerelement (54) innerhalb des äußeren Lagerelements (34) umfasst.

6. Lageranordnung gemäß einem der vorhergehenden Ansprüche, welche mehrere Flanschabschnitte (36) umfasst, die sich von dem äußeren Gehäuse (42) erstrecken.

7. Lageranordnung gemäß einem der vorhergehenden Ansprüche, wobei der innere Laufring (62) des inneren Lagers (32) und der innere Laufring (64) des äußeren Lagers (34) ausgestaltet sind, um einen Zapfen (28) aufzunehmen.

8. Vollgelenkige Nabenanordnung (20) eines Drehflügelflugzeugs, welche umfasst:
- einen Nabenmittelkörper (22), welcher mehrere Befestigungsabschnitte aufweist, welche ausgestaltet sind, um mehrere Lageranordnungen (30) aufzunehmen, die um einen Umfang des Nabenmittelkörpers (22) angeordnet sind;
- mehrere Rotoranordnungen (24), welche ausgestaltet sind, um ein Paar von Lageranordnungen (30) aufzunehmen; und
- mehrere Lageranordnungen (30) gemäß einem der Ansprüche 1-7.

9. Nabenanordnung gemäß Anspruch 8, welche ferner geschlossene Endplatten, die durch entsprechende innere Laufringe (62, 64) des inneren Lagerelements (32) ausgebildet sind, und das äußere Lagerelement (34) umfassen.

10. Nabenanordnung gemäß Anspruch 8 oder 9, welche ferner mehrere Lagerkoppelansätze (49) umfasst, welche das innere Lagerelement (32) und das äußere Lagerelement (34) innerhalb des äußeren Gehäuses (42) verbinden.

11. Nabenanordnung gemäß Anspruch 8, 9 oder 10, welche ferner einen Verbindungsstabbefestigungsansatz mittig durch die geschlossenen Endplatten angeordnet umfasst, welcher die Lageranordnung (30) mit der Rotoranordnung (24) verbindet.

12. Verfahren zur Ausbildung einer Klapplageranordnung (30) für ein Drehflügelflugzeug, welches umfasst:
- Ausbilden eines axialen inneren Lagerelements (32), wobei das innere Lagerelement (32) einen inneren Laufring (62), welcher hauptsächlich mit einem Elastomerelement (54) verbunden ist, und einen äußeren Laufring (67), welcher hauptsächlich mit dem Elastomerelement (54) verbunden ist, aufweist;
- Ausbilden eines axialen äußeren Lagerelements (34), wobei das äußere Lagerelement (34) einen inneren Laufring (64), welcher hauptsächlich mit einem Elastomerelement (54) verbunden ist, und einen äußeren Laufring (66), welcher hauptsächlich mit einem Elastomerelement (54) verbunden ist, aufweist;
- Ausbilden eines äußeren Gehäuses (42), wobei das äußere Gehäuse (42) eine äußere Oberfläche und eine innere Oberfläche aufweist, wobei die äußere Oberfläche mehrere Flanschabschnitte (36) aufweist, welche sich radial von der äußeren Oberfläche erstrecken, wobei die innere Oberfläche ausgestaltet ist, um innere (32) und die äußeren Lagerelemente (34) aufzunehmen;
- Einsetzen des innere Lagerelements (32) in das äußere Gehäuse (42);
- Verbinden des äußeren Laufrings (67) des inneren Lagerelements (32) mit der inneren Oberfläche des äußeren Gehäuses (42), um eine erste Sekundärverbindung auszubilden;
- Einsetzen des äußeren Lagerelements (34) in das äußere Gehäuse (42) derart, dass eine Reibungsverbindung zwischen dem inneren Laufring (62) des inneren Lagerelements (32) und dem äußeren Laufring des äußeren Elements (34) erreicht wird;
- Verbinden des äußeren Lagerrings (66) des äußeren Lagerelements (34) mit der inneren Oberfläche des äußeren Gehäuses (42), um eine zweite Sekundärverbindung auszubilden;
- Zusammendrücken des inneren Lagerelements (32) und des äußeren Lagerelements (34), um eine axiale Vorspannkraft zu erzeugen; und
- Anbringen mehrerer Lagerkoppelansätze (49) axial durch das innere Lagerelement (32) und das äußere Lagerelement (34).

13. Verfahren gemäß Anspruch 12, wobei die ersten und zweiten Sekundärverbindungen Klebeverbindungen sind.

14. Verfahren gemäß Anspruch 13, wobei ein Drücken des äußeren Lagerelements (34) ferner umfasst:
Verbinden des inneren Laufrings (62) des inneren Lagerelements (32) mit dem inneren Laufring (64) des äußeren Lagerrings (34) durch eine Reibpassung.

15. Verfahren gemäß Anspruch 13 oder 14, wobei die Lageranordnung (30) eine Drehflügelflugzeugklapplageranordnung ist.

16. Verfahren gemäß Anspruch 13, 14 oder 15, welches umfasst:
- Ausbilden eines äußeren Gehäuses (42), welches einen ersten Abschnitt (45) und einen zweiten Abschnitt (47) aufweist, wobei das äußere Gehäuse (42) eine äußere Oberfläche aufweist, welche mehrere Flanschabschnitte (36) aufweist, die sich davon radial erstrecken, wobei das äußere Gehäuse (42) eine innere Oberfläche aufweist, welche ausgestaltet ist, um ein Lagerelement (32) in dem ersten Abschnitt (45) und ein Lagerelement (34) in dem zweiten Abschnitt (47) aufzunehmen;
- Ausbilden eines abgeschrägten konischen Lagerelements (30), welches einen äußeren Laufring, der hauptsächlich mit einem Elastomerelement (54) verbunden ist, und einen inneren Laufring, der hauptsächlich mit dem Elastomerelement (54) verbunden ist, aufweist, wobei der innere Laufring einen erweiterten Abschnitt aufweist, welcher sich über das Elastomerelement erstreckt und ein geschlossenes Ende aufweist;
- Einsetzen des inneren Lagerelements (32) in den ersten Abschnitt (45) des äußeren Gehäuses (42), wobei die konische Abschrägung des Lagerelements (32) nach innen gerichtet ist;
- Verbinden des äußeren Laufrings (67) des inneren Lagerelements (32) mit der inneren Oberfläche des äußeren Gehäuses (42) in dem ersten Abschnitt (45), um eine erste Sekundärverbindung auszubilden;
- Ausbilden eines abgeschrägten konischen äußeren Lagerelements (34), wobei das Lagerelement (34) einen äußeren Laufring (66), der hauptsächlich mit einem Elastomerelement (54) verbunden ist, und einen inneren Laufring (64), der hauptsächlich mit dem Elastomerelement (54) verbunden ist, aufweist, wobei der inneren Laufring (64) einen Aufnahmeabschnitt aufweist, welcher angepasst ist, um den erweiterten Abschnitt des inneren Laufrings (62) des inneren Lagers (32) aufzunehmen, wobei der innere Laufring (62) eine äußere Platte ausbildet;
- Einsetzen des äußeren Lagerelements (34) in den zweiten Abschnitt (47) des äußeren Gehäuses (42), wobei die konische Abschrägung des Lagerelements (34) nach innen gerichtete ist, wobei Abschrägungsrichtungen der eingesetzten Lagerelemente (32, 34) einander gegenüberliegen und entsprechende innere Laufringe (62, 64) einander reibend eingreifen, wobei eine axiale Vorspannkraft auf die Lagerelemente (32, 34) angewendet wird;
- Verbinden des äußeren Laufrings (66) des äußeren Lagerelements (34) mit der inneren Oberfläche des äußeren Gehäuses (42) in dem ersten Abschnitt (45), um eine zweite Sekundärverbindung auszubilden; und
- Verbinden der entsprechenden Lagerelemente mit mehreren Lagerkoppelansätzen (49).

17. Verfahren zum Ausbilden einer vollgelenkigen Drehnabenanordnung für ein Drehflügelflugzeug, welches umfasst:
- Ausbilden eines Nabenmittelkörpers (22), welcher mehrere Befestigungsabschnitte aufweist, die um einen Umfang des Nabenmittelkörpers (22) angeordnet sind, wobei die Befestigungsabschnitte ausgestaltet sind, um mehrere der Lageranordnungen (30) aufzunehmen, Erzeugen mehrere Rotoranordnungen (24), welche einen Verbindungsstab (26) mit einem Paar von Befestigungsstabzapfenabschnitten (28), die ausgestaltet sind, um in die Lageranordnungen (30) eingesetzt zu werden, aufweisen;
- Ausbilden einer intern vorgespannten Lageranordnung (30) gemäß einem der Ansprüche 12-16.

18. Verfahren gemäß Anspruch 17, welches ferner ein axiales Vorspannen der Lagerelemente (32, 34) innerhalb der Lageranordnung (30) umfasst.

19. Verfahren gemäß einem der Ansprüche 12-18, wobei die axiale Vorspannkraft in einem Bereich von näherungsweise 3855 kg (8500 Pfund) bis näherungsweise 6804 kg (15 000 Pfund) ist.

20. Verfahren gemäß einem der Ansprüche 12-19, welches ferner ein Befestigen der Lageranordnung (30) an dem Verbindungsstabzapfen (28) durch ein Befestigungsmittel, welches sich axial durch die Lageranordnung (30) und in ein Ende des Verbindungsstabzapfens (28) erstreckt, umfasst.

21. Verfahren gemäß Anspruch 20, wobei das Verbindungsmittel ein Bolzen ist.

22. Verfahren gemäß einem der Ansprüche 12-21, wobei die Lageranordnung (30) eine Klappbewegung der Rotoranordnung (24) relativ zu dem Nabenmittelkörper (22) ermöglicht.

## Revendications

1. Ensemble de palier (30) pour volet d'hélicoptère, comprenant :
un boîtier externe (42) définissant une première (45) et une seconde sections (47), le boîtier externe (42) ayant une surface externe configurée pour se fixer à un corps central de moyeu (22) et une surface interne configurée pour recevoir un ensemble raccordé d'éléments de palier élastomère conique progressivement rétréci (32, 34) ;
un ensemble de palier élastomère conique progressivement rétréci axialement interne (32) ayant un chemin de roulement externe (67) et un chemin de roulement interne (62), le chemin de roulement externe (67) étant relié à la surface interne du boîtier externe (42) et le chemin de roulement interne (62) ayant une partie étendue définissant une plaque d'extrémité fermée (53), dans lequel la conicité interne conique de l'élément de palier interne (32) est dirigée axialement vers l'intérieur par rapport au boîtier externe (42), la plaque d'extrémité fermée (53) définissant une pluralité d'alésages (44) à travers celle-ci ;
un élément de palier élastomère conique progressivement rétréci axialement vers l'extérieur (34) ayant un chemin de roulement externe (66) et un chemin de roulement interne (64), le chemin de roulement externe (66) étant relié à la surface interne du boîtier externe (42) et le chemin de roulement interne (64) étant mis en prise par frottement avec la partie étendue du chemin de roulement interne (62) de l'élément de palier interne (32), dans lequel la conicité conique de l'élément de palier externe est dirigée axialement vers l'intérieur dans une direction qui est directement opposée à la conicité de palier interne, le chemin de roulement interne (64) de l'élément de palier externe (34) formant une plaque externe (56) définissant une pluralité d'alésages (46, 48) à travers celle-ci, dans lequel une précharge axiale est appliquée sur l'élément de palier interne (32) et sur l'élément de palier externe (34) ; et
au moins une patte de couplage (49) de palier raccordant les éléments de palier (32, 34).

2. Ensemble de palier selon la revendication 1, dans lequel la précharge est de l'ordre d'environ 3855 kilogrammes (8500 livres) jusqu'à environ 6804 kilogrammes (15000 livres).

3. Ensemble de palier selon la revendication 1 ou 2, dans lequel la pluralité d'alésages définie à travers les chemins de roulement interne (62, 64) respectifs comprend au moins un alésage axial (44), un alésage de coupleur de palier (48) et un alésage de centrage.

4. Ensemble de palier selon la revendication 1, 2 ou 3, comprenant en outre un élément élastomère (54) à l'intérieur de l'élément de palier interne (32).

5. Ensemble de palier selon l'une quelconque des revendications précédentes, comprenant en outre un élément élastomère (54) à l'intérieur de l'élément de palier externe (34).

6. Ensemble de palier selon l'une quelconque des revendications précédentes, comprenant en outre une pluralité de sections de rebord (36) s'étendant à partir du boîtier externe (42).

7. Ensemble de palier selon l'une quelconque des revendications précédentes, dans lequel le chemin de roulement interne (62) du palier interne (32) et le chemin de roulement interne (64) du palier externe (34) sont configurés pour recevoir un tourillon (28).

8. Ensemble de moyeu complètement articulé (20) d'hélicoptère, comprenant :
un corps central de moyeu (22) comprenant une pluralité de sections de fixation, configurée pour recevoir une pluralité d'ensembles de palier (30), positionnés autour d'une périphérie du corps central de moyeu (22) ;
une pluralité d'ensembles de rotor (24) configurée pour recevoir une paire d'ensembles de palier (30) ; et
une pluralité d'ensembles de palier (30) selon l'une quelconque des revendications 1 à 7.

9. Ensemble de moyeu selon la revendication 8, comprenant en outre des plaques d'extrémité fermée formées par les chemins de roulement internes (62, 64) respectifs de l'élément de palier interne (32) et de l'élément de palier externe (34).

10. Ensemble de moyeu selon la revendication 8 ou 9, comprenant en outre une pluralité de pattes de couplage (49) de palier raccordant l'élément de palier interne (32) et l'élément de palier externe (34) à l'intérieur du boîtier externe (42).

11. Ensemble de moyeu selon la revendication 8, 9 ou 10 comprenant en outre une patte de fixation de traverse disposée de manière centrale à travers les plaques d'extrémité fermée raccordant l'ensemble de palier (30) à l'ensemble de rotor (24).

12. Procédé permettant de former un ensemble de palier (30) de volet pour hélicoptère, comprenant les étapes consistant à :
former un élément de palier axialement interne (32), l'élément de palier interne (32) comprenant un chemin de roulement interne (62) principalement relié à un élément élastomère (54) et un chemin de roulement externe (67) principalement relié à l'élément élastomère (54) ;
former un élément de palier axialement externe (34), l'élément de palier externe (34) comprenant un chemin de roulement interne (64) principalement relié à un élément élastomère (54) et un chemin de roulement externe (66) principalement relié à l'élément élastomère (54) ;
former un boîtier externe (42), le boîtier externe (42) ayant une surface externe et une surface interne, la surface externe ayant une pluralité de sections de rebord (36) s'étendant radialement à partir de la surface externe, la surface interne étant configurée pour recevoir les éléments de palier interne (32) et externe (34) ;
insérer l'élément de palier interne (32) dans le boîtier externe (42) ;
relier le chemin de roulement externe (67) de l'élément de palier interne (32) à la surface interne du boîtier externe (42) pour former une première liaison secondaire ;
insérer l'élément de palier externe (34) dans le boîtier externe (42) de sorte que l'on obtient un raccordement par frottement entre le chemin de roulement interne (62) de l'élément de palier interne (32) et le chemin de roulement interne de l'élément externe (34) ;
relier le chemin de roulement externe (66) de l'élément de palier externe (34) à la surface interne du boîtier externe (42) pour former une seconde liaison secondaire ;
comprimer l'élément de palier interne (32) et l'élément de palier externe (34) ensemble pour créer une précharge axiale ; et
fixer une pluralité de pattes de couplage (49) de palier axialement en passant par l'élément de palier interne (32) et l'élément de palier externe (34).

13. Procédé selon la revendication 12, dans lequel les première et seconde liaisons secondaires sont des liaisons d'adhésion.

14. Procédé selon la revendication 13, dans lequel l'étape consistant à comprimer l'élément de palier externe (34) comprend en outre l'étape consistant à :
assembler le chemin de roulement interne (62) de l'élément de palier interne (32) avec le chemin de roulement interne (64) de l'élément de palier externe (34) par un raccord à pression.

15. Procédé selon la revendication 13 ou 14, dans lequel l'ensemble de palier (30) est un ensemble de palier pour volet d'hélicoptère.

16. Procédé selon la revendication 13, 14 ou 15, comprenant les étapes consistant à :
former un boîtier externe (42) ayant une première section (45) et une seconde section (47), le boîtier externe (42) comprenant une surface externe ayant une pluralité de parties de rebord (36) s'étendant radialement à partir de celle-ci, le boîtier externe (42) comprenant une surface interne configurée pour recevoir un élément de palier (32) dans la première section (45) et un élément de palier (34) dans la seconde section (47) ;
former un élément de palier conique progressivement rétréci (30) comprenant un chemin de roulement externe principalement relié à un élément élastomère (54) et un chemin de roulement interne principalement relié à l'élément élastomère (54), le chemin de roulement interne comprenant une partie étendue s'étendant au-delà de l'élément élastomère et ayant une extrémité fermée ;
insérer l'élément de palier interne (32) dans la première section (45) du boîtier externe (42), l'élément de palier conique progressivement rétréci (32) étant dirigé vers l'intérieur ;
relier le chemin de roulement externe (67) de l'élément de palier interne (32) à la surface interne du boîtier externe (42) dans la première section (45) pour former une première liaison secondaire ;
former un élément de palier externe conique progressivement rétréci (34), l'élément de palier (34) comprenant un chemin de roulement externe (66) principalement relié à un élément élastomère (54) et un chemin de roulement interne (64) principalement relié à l'élément élastomère (54), le chemin de roulement interne (64) comprenant une partie de réception raccordée pour recevoir la partie étendue du chemin de roulement interne (62) du palier interne (32), le chemin de roulement interne (62) formant une plaque externe ;
insérer l'élément de palier externe (34) dans la seconde section (47) du boîtier externe (42), l'élément de palier conique progressivement rétréci (34) étant dirigé vers l'intérieur, les directions de conicité des éléments de palier insérés (32, 34) s'opposant entre elles et les chemins de roulement internes (62, 64) respectifs se mettant en prise par frottement entre eux, une précharge axiale étant appliquée sur les éléments de palier (32, 34) ;
relier le chemin de roulement externe (66) de l'élément de palier externe (34) à la surface interne du boîtier externe (42) dans la première section (45) pour former une seconde liaison secondaire ; et
raccorder l'élément de palier respectif avec une pluralité de pattes de couplage (49) de palier.

17. Procédé permettant de former un ensemble de moyeu rotatif complètement articulé pour hélicoptère, comprenant les étapes consistant à :
former un corps central de moyeu (22) comprenant une pluralité de sections de fixation positionnées autour d'une périphérie du corps central de moyeu (22), les sections de fixation étant configurées pour recevoir une pluralité d'ensembles de palier (30), créer une pluralité d'ensembles de rotor (24) comprenant une traverse (26) ayant une paire de sections de tourillon (28) de traverse configurée pour être insérée dans les ensembles de paliers (30) ;
former un ensemble de palier préchargé (30) de manière interne selon l'une quelconque des revendications 12 à 16.

18. Procédé selon la revendication 17, comprenant en outre l'étape consistant à précharger de manière axiale les éléments de palier (32, 34) à l'intérieur de l'ensemble de palier (30).

19. Procédé selon l'une quelconque des revendications 12 à 18, dans lequel la précharge axiale est de l'ordre d'environ 3855 kilogrammes (8500 livres) à environ 6804 kilogrammes (15000 livres).

20. Procédé selon l'une quelconque des revendications 12 à 19, comprenant en outre l'étape consistant à fixer l'ensemble de palier (30) sur le tourillon (28) de traverse par une fixation s'étendant de manière axiale à travers l'ensemble de palier (30) et dans une extrémité du tourillon (28) de traverse.

21. Procédé selon la revendication 20, dans lequel la fixation est un boulon.

22. Procédé selon l'une quelconque des revendications 12 à 21, dans lequel l'ensemble de palier (30) permet le mouvement de volet de l'ensemble de rotor (24) par rapport au corps central de moyeu (22).
